(19) Europäisches Patentamt
European Patent Office
Office européen des brevets

(11) **EP 1 798 800 A1**

(12) **EUROPEAN PATENT APPLICATION**

(43) Date of publication:
**20.06.2007 Bulletin 2007/25**

(51) Int Cl.:
*H01M 8/12* [(2006.01)]     *H01M 8/02* [(2006.01)]

(21) Application number: **05112175.4**

(22) Date of filing: **14.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Ecole Polytechnique Fédérale de Lausanne (EPFL)**
**1015 Lausanne (CH)**

(72) Inventors:
- **Rey-Mermet Samuel**
  **1003 Lausanne (CH)**
- **Muralt Paul**
  **1024 Ecublens (CH)**
- **Baborowski Jacek**
  **1307 Lussery-Villars (CH)**

(74) Representative: **Cronin, Brian Harold John et al**
**CRONIN Intellectual Property**
**Chemin de Précossy 31**
**1260 Nyon (CH)**

(54) **Metallic supporting grid for ultrathin electrolyte membranes in solid oxide fuel cells**

(57)     A solid oxide fuel cell structure obtainable by selective electrochemical processing, comprising an electrolyte membrane (2) formed by a thin film more than 50nm but less than 10$\mu$m thick, covering a supporting structure (1) made of a bulk substrate, the supporting structure having at least one 100$\mu$m to 100mm wide opening that is covered by the electrolyte membrane (2). A metallic grid (9) is applied over the electrolyte membrane (2) and serves at the same time as structural element to support the membrane and as current collector.

The metallic grid (9) has gridlines that are higher than the membrane thickness and whose height to width ratio is larger than 0.5, and a mesh size about 10 to 1000 times smaller than the width of said opening. The metallic grid (9) can be applied on top of a patterned metallic sublayer structure (7,7a) arranged for supplying a fine distribution of current and increasing the density of electrolyte-electrode boundaries exposed to the fluid.

EP 1 798 800 A1

**Description**

**FIELD OF INVENTION**

This invention relates to miniaturized solid oxide fuel cells requiring thin electrolyte membranes including electrodes and electrode contacts.

**BACKGROUND**

The essential part of a solid oxide fuel cell (SOFC) consists of a ceramic plate made of an oxygen ionic conductor having the function of a solid electrolyte. The electrolyte plate is covered on the anode side by a porous metallic film, and on the cathode side by an electronic conductive oxide. Being exposed to a flow of air or oxygen ($O_2$), this cathode layer takes up oxygen, and supplies the necessary electrons to form oxygen ions that traverse the electrolyte plate to reach the anode. There, a hydrocarbon gas mixture is oxidized by the oxygen ions and the electron charges are given to the anode electrode. The respective electrochemical potentials on the two sides are such that a voltage difference of roughly one Volt is installed allowing for recuperation of electrical power. The operation temperature of a classical SOFC amounts to 800 to 1000°C (see e.g. B.C.H. Steele, A. Heinzel, Materials for fuel-cell technologies, NATURE vol. 414, p. 345 (2001)). Operation procedures, application fields, and design depend crucially on the operation temperature. While high operation temperatures are good for large cells working continuously, high temperatures are unpractical for small cells and for automotive applications. In the first case, heat losses become too important, and in the second case, the time and energy consumption for start-up become too large. It is conceivable to operate SOFC's at temperatures as low as 500°C (R. Doshi, V.L. Richards, J.D. Carter, X. Wang, and M. Krumpelt, Development of SOFC's that operate at 500 °C, J.El.Chem.Soc. vol. 146, p.1273 (1999)). Such low temperatures are compatible with concepts of small SOFC cells in the centimeter dimension, able to be employed as energy source for portable electronic and electric devices. In such markets, miniaturized SOFC's are expected to have a large potential. Micro-SOFC's would be fuelled by liquid butane for instance.

In miniaturized cells of lower temperature, the electrolyte plate or layer thickness must be reduced to reduce resistive losses inside the electrolyte. The ionic conductivity σ follows an exponential law of the form:

$$\sigma = \frac{A}{T}\exp(-E_a/kT) \qquad (1)$$

where $A$ is a constant, $E_a$ the activation energy, $k$ the Boltzmann constant and $T$ the absolute temperature. The internal resistance per unit area $R_i$ of the cell can be written as:

$$R_i = \frac{t_{el}}{\sigma} = \frac{t_{el}T}{A}\exp(E_a/kT) \qquad (2)$$

$R_i$ is typically chosen as 0.1-0.2 $\Omega$cm$^2$ to allow for currents of 100 mA/cm$^2$ without loss of output voltage. Taking as an example a $Ce_{0.8}Gd_{0.2}O_3$ membrane, whose activation energy amounts to 0.7 eV, the thickness must be reduced by a factor 21 when decreasing the temperature from 1273K to 823K, provided that the conductivity of the material is the same for both thicknesses. This means that the electrolyte membrane cannot be anymore a self supported one of several 100$\mu$m to 1mm thickness, but must be thinned down to 5-50$\mu$m, and supported by another structure. Such supporting structure described in the literature is a 300 to 1200$\mu$m thick porous anode, consisting usually of a composite structure of nickel and yttrium stabilized zirconia (YSZ) (see, e.g. P. Holtapples, U. Vogt, and T. Graule, Ceramic materials for advanced solid oxide fuel cells, Adv. Eng.Mat. vol 292, p. 292 (2005)).

An article Thin-film heterostructure solid oxide fuel cells by X Chen, N.J:Wu, L.Smith and A.Ignatiev, Applied Physics letters Vol. 84, Number 14, pages 2700-2702 describes a micro thin-film solid oxide fuel cell having a nickel foil substrate processed into a porous flat anode that has an array of circular pores.

In US patent application US 2005/0115889-A1 (pub. date June 2, 2005) entitled "Stressed thin film membrane islands", a stiffening structure is proposed to increase the stability of thin film membranes that are closing a large opening in a substrate. The proposed solutions include a grid structure superimposed to the thin film membrane to stiffen and support the membrane. The solution proposed is based on silicon micromachining techniques including deep silicon etching to define trenches. These are filled with nitride and oxide materials by means of thermal or plasma enhanced chemical vapor deposition. There are three major problems related to that invention:

1) The membrane needs to be perforated to grow the supporting structure, risking leakage in case of SOFC application.

2) The supporting structure traverses the membrane, requiring insulating material for the supporting structure.

3) The supporting structure is produced in a rather complicated, delicate and costly way.

The invention aims to remove some of these problems, and add additional functionality.

## SUMMARY OF THE INVENTION

In this invention, a different way is pursued. The membrane thinness is chosen to allow for compatibility with thin film and micromachining technology. An electrolyte membrane in the thickness range of 50nm to 10$\mu$m - deposited for example by sputtering or sol-gel techniques - closes a 100$\mu$m to 100 mm wide opening of a substrate of typically 0.5-1mm thickness. A metallic grid structure with a mesh size that is usually 10 to 1000 times smaller than the substrate opening supports the membrane to avoid cracking caused by excessive stresses and buckling. In addition, the metallic grid serves as current collector, preferentially on the anode side.
This invention relates to miniaturized solid oxide fuel cells requiring thin electrolyte membranes including electrodes and electrode contacts. The thinness of the electrolyte membrane requires a supporting structure.
The invention thus provides a solid oxide fuel cell structure obtainable by selective electrochemical processing, the structure comprising:

- an electrolyte membrane formed by a thin film more than 50nm but less than 10$\mu$m thick, covering a supporting structure made of a bulk substrate, the supporting structure having at least one opening that is 100$\mu$m to 100mm wide and that is covered by the electrolyte membrane; and

- a metallic grid applied over the electrolyte membrane and serving at the same time as structural element to support the membrane and as current collector, the metallic grid having gridlines that are higher than the membrane thickness and whose height to width ratio is larger than 0.5, preferably larger than 1 and even more preferably larger than 2.

The metallic grid usually has a mesh size about 10 to 1000 times smaller than the width of said opening.
By virtue of the grid's morphology and its aspect ratio, more space is left for the porous anode material which is easier to access. The new metallic grid is relatively thick and open, allowing better opportunities for 3-phase contact leading to better performance. It is also adapted to the expected thermal strains and stresses.
Preferably, the metallic grid is applied on top of a patterned metallic sub-layer structure, the sub-layer structure comprising a wider pattern corresponding to the applied metallic grid, and a finer pattern that is not covered by the applied metallic grid, this finer pattern being arranged for supplying a fine distribution of current and increasing the density of electrolyte-electrode boundaries exposed to the fluid, and the metallic grid is on an anode side which in use is exposed to hydrocarbon fluid.
Usually, the metallic grid is an anode current collector, and a cathode current collector structure is added on an opposite cathode side. The cathode current collector structure can have the same size and shape as the anode current collector grid, or the cathode current collector structure can have a different shape and/or be displaced with respect to the anode current collector grid.
The invention removes some of the aforesaid problems with US 2005/0115889-A1, and adds additional functionality to the supporting structure:

1) The membrane (electrolyte in our case) is not perforated during fabrication of the supporting structure.
2) The supporting structure is on one side only (anode) and can be made with a metallic material and with high aspect ratio.
3) The fabrication is less complicated and less expensive, as it uses electrochemical deposition of typically nickel. The mould for the creation of high aspect ratio grid structures is the not the silicon substrate on which the membrane is grown (as in US 2005/0115889), instead we can use a patterned thick photoresist on top of the membrane to form the mold.
4) The metal grid is used at the same time to work as current collector, thus supporting the functionality of thin porous electrodes, as typically used on the anode side.

5) A further extension introduces a thin metallic network structure on the side opposed to the supporting metallic grid to collect the current on this side and connect to a contact pad on the same side as the other one. The side with the contacts is preferentially the anode side, thus in reducing atmosphere, in order to avoid oxidation of contact metals.

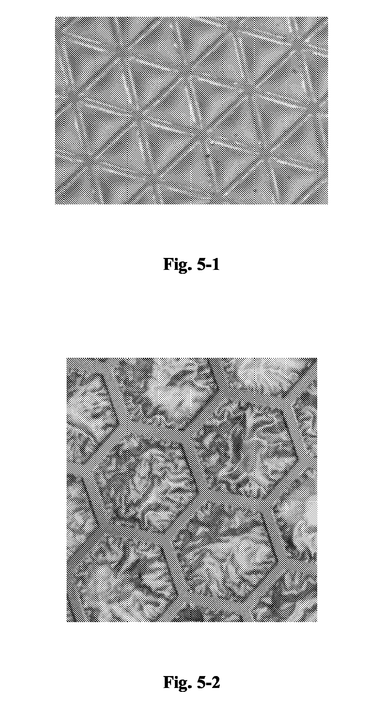

A critical issue is the stability of membranes at the operation temperature (500-600°C). Typically-used electrolyte materials such as $CeGdO_2$ (CGO) or YSZ exhibit a large thermal expansion of around l2ppm/K, which in addition may depend on the oxygen partial pressure. The thermal expansion of Ni comes quite close (l3ppm/K). Hence the Ni grid and the electrolyte membrane expand by about the same amount when the temperature is raised. The substrate usually has much less expansion (Silicon: 3ppm/K, silicon glasses: 1 to 8ppm/K). Having a larger thermal expansion than the substrate, the membrane will buckle. The critical buckling strain $\varepsilon_{crit} = \dfrac{\pi^2 t^2}{3L^2}$ (S.P. Timoshenko, and J.M. Gere: Theory of elastic stability, McGraw-Hill, NY 1961, pp49) for a 1μm membrane closing a 10mm diameter opening amounts to less than 1ppm. A temperature change of 500°C - as occurs when installing between room temperature and operation temperature - results in a thermal strain $\left( \varepsilon_{op} = (\alpha_{mem} - \alpha_{sub}) \cdot \Delta T \right)$ of up to 0.5%, thus by far larger than the critical strain. The role of the metallic grid is to partition the membrane into smaller areas exhibiting larger critical strains (for instance, a 1μm membrane within a 100μm wide opening of the grid exhibits a critical strain of already 0.3%). The Ni grid takes up the forces from the border of the large opening in the substrate. The grid being thicker than the membrane (usually more than twice as thick) the buckling - if occurring - is smoother and more regular than that of the thin electrolyte membrane (see Fig. 5-1 as an example) and the amplitude is lower. In addition, a metal grid is much tougher than a ceramic membrane. For large openings, a warping cannot be avoided, even with a grid of high aspect ratio. In this case a judicious design of grid will allow for a controlled warping.

The grid geometry can be adapted to expected strains. Typically the supporting grid exhibits 5μm wide and 10μm high grid lines (i.e. with the aspect ratio, height to width, of 2) and defining 20 to 200μm wide grid openings (mesh size). A high aspect ratio ensures keeping a large efficiency of the cell, which is proportional to the active area exposed to the fuel gas flow divided by total area (can be called "filling factor"). Membrane thickness and diameter of grid openings can be matched to obtain locally flat membranes within the grid openings, and relax thermal stresses to form a global deformation of the grid/membrane structure. Engineering to obtain predefined buckling may yield the requirement that the optimal grid geometry at the border of the membrane might be different from that in the center of the membrane. This is anyhow true for designs inspired by spin webs. In case of a hexagonal grid, the border elements could be filled with triangles to reinforce stiffness at the border (as in Fig. 5-1).

The metallic grid plays at the same time the role of current collector. Being at the anode side, a porous Ni-electrolyte composite is deposited on top of the membrane on the grid side. The metallic grid guarantees the global connectivity of the porous layer, and allows reduction of the electrical conductivity of the porous electrode material. Preferential material for the grid is material that is well grown by electrochemical deposition, and in addition compatible with the anode-side function, such as nickel, palladium, copper, molybdenum, cobalt, ruthenium, iridium. Suitable seed layer materials are: Pt, Ir, Ru, etc., possibly also nickel or copper.

Furthermore, the sub-layer or seed layer used for the electro-deposition of the metallic grid can be extended to provide a fine distribution of current. Only parts of this seed layer are then covered by the resist forming the mould for electro-deposition. This fine distribution may be a regular sub-grid structure. Its mesh size may be decreased to reach a high density of fme distribution lines, thus approaching an artificial porous structure. The fme distribution lines could be as thin as a few 100nm's. They could be organized as fractal structure carrying the current form the inside of the grid opening to the grid lines, having in the center a higher density of very narrow lines, and towards the grid line, a lower density of wider lines.

The metallic grid may exhibit a polygonal pattern including in particular regular polygons such as triangles, squares, hexagons and octagons or irregular shapes including spider web type shapes and fractal structures.

The invention also concerns an array of structures as described, which are fabricated on a common substrate and connected electrically to form an array of solid oxide fuel cells.

## BRIEF DESCRIPTION OF THE DRAWINGS

The invention will be further described by way of example with reference to the accompanying drawings, in which:

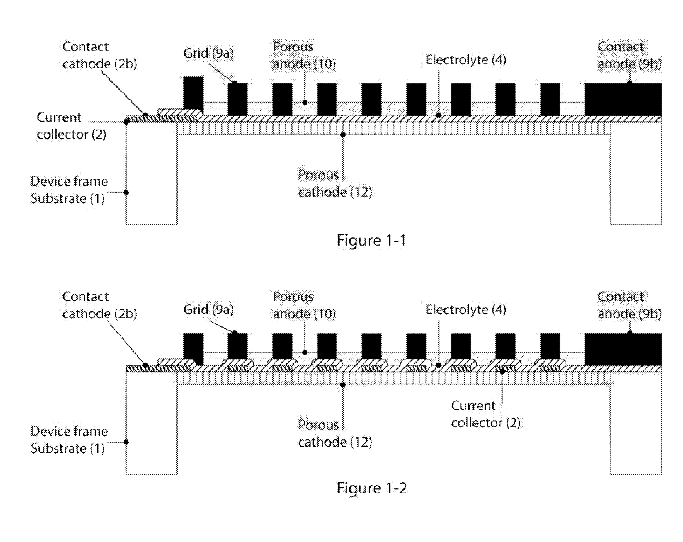

Fig. 1-1     shows an embodiment of a fuel cell structure according to the invention, without a cathode collector grid;

Fig. 1-2     shows another embodiment of a fuel cell structure according to the invention with a cathode collector grid;

Fig. 2    illustrates in Figs. 2-1 to 2-16 the successive steps for the fabrication of the structure of Fig. 1-2;

Fig. 3    illustrates in Figs. 3-1 to 3-4 variations where the anode grid is grown on a sub-layer or seed layer;

Fig. 4    is a schematic top view showing the pattern of the metallic anode grid, sub-layer or seed layer and current collector; and

Fig. 5    shows in Figs. 5-1 and 5-2 photographs of examples of different grid shapes.

## DETAILED DESCRIPTION OF THE DRAWINGS

For convenience, the reference numbers used in the drawings are shown in Table 1.

**Table 1: List of reference numbers.**

| N° | Description |
|---|---|
| 1 | Substrate |
| 2 | Current collector cathode |
| 2a | Additional grid lines of cathode |
| 2b | Electrical contact of cathode |
| 3 | Photoresist Mask 1 |
| 4 | Electrolyte |
| 5 | Photoresist Mask 2 |
| 6 | Photoresist Mask 3 |
| 7 | Sub- Seed-layer/current collector anode |
| 7a | Intermediate sub- seed-layer |
| 8 | Photoresist Mask 4 mould |
| 9 | Grid/Electrical contact anode |
| 9a | Metallic grid |
| 9b | Electrical contact of the metallic grid |
| 10 | Porous anode |
| 11 | Photoresist Mask 5 |
| 12 | Porous cathode |

Fig. 1-1 is a schematic view of a PEN structure of a fuel cell composed of a porous cathode 12, a thin electrolyte film 4 and porous anode layers 10. The PEN is mounted on a substrate 1 and mechanically supported by a metallic grid 9a which is also a part of the anode current collector. Electrical connections 2b and 9b respectively for the anode and the cathode are both placed on the anode side of the device.

Fig. 1-2 also shows a PEN structure of a fuel cell like that of Fig. 1-1 but additionally with a current collector grid 2 on the cathode side.

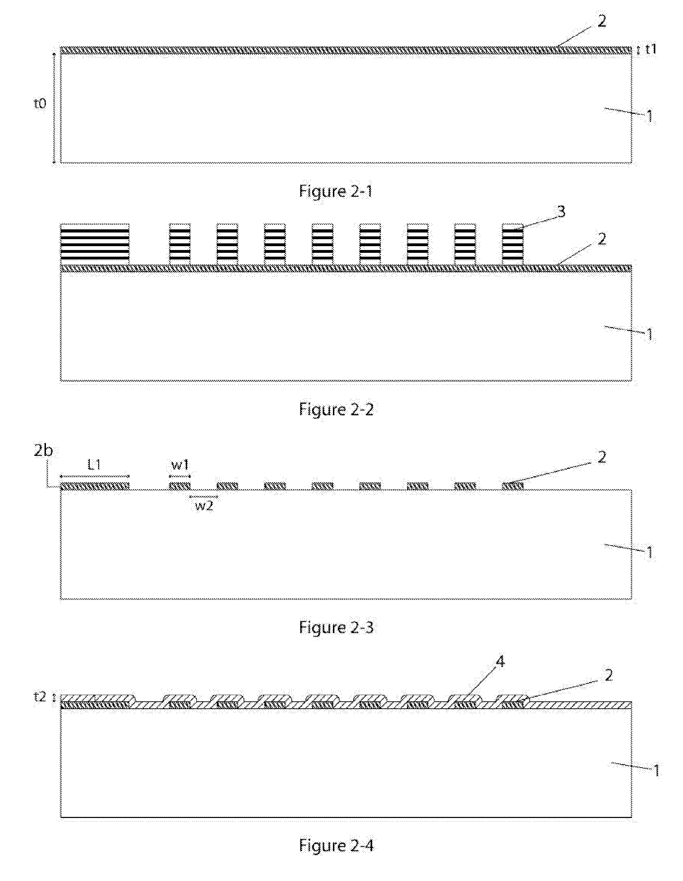

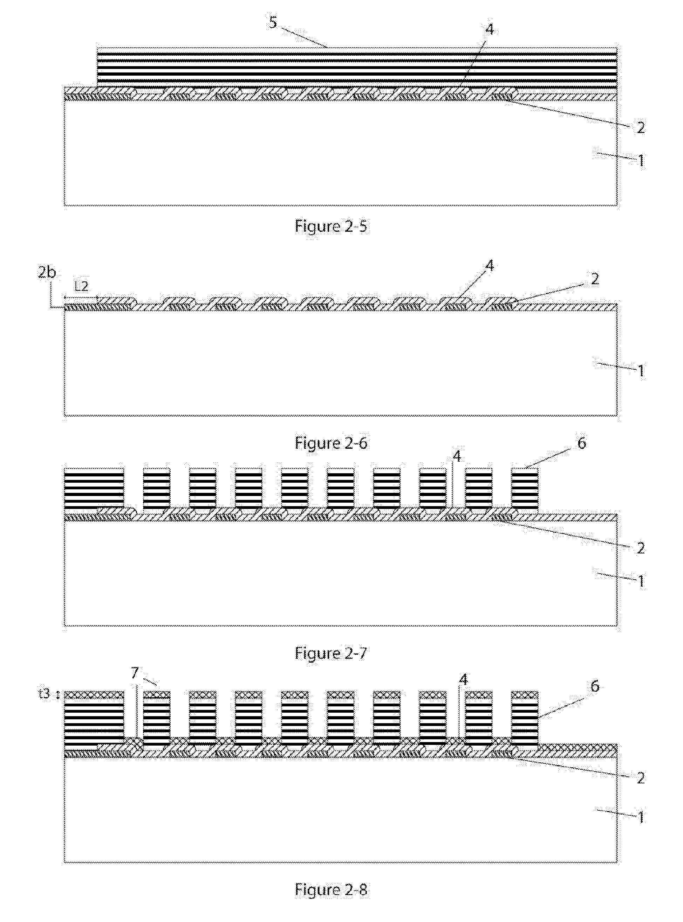

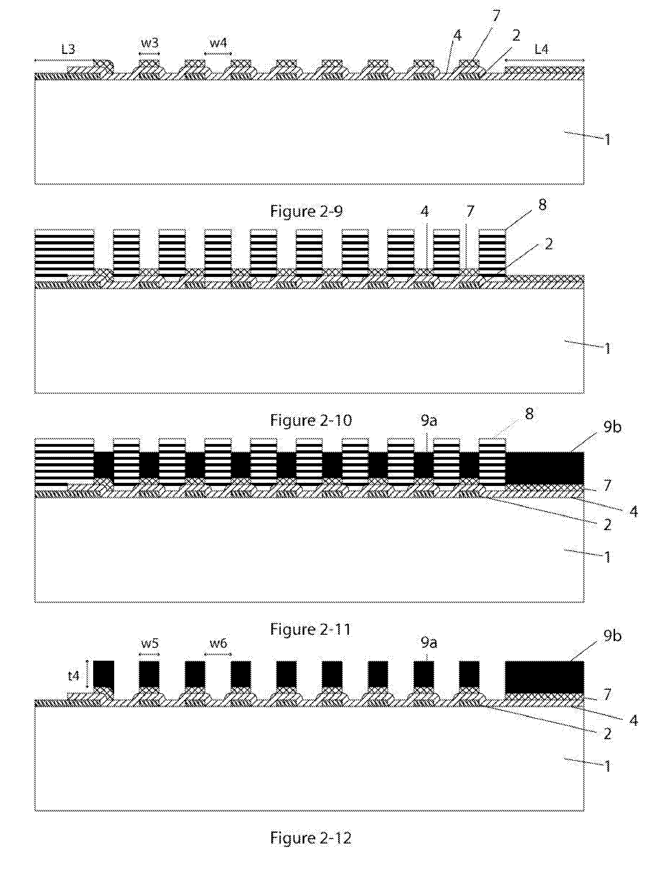

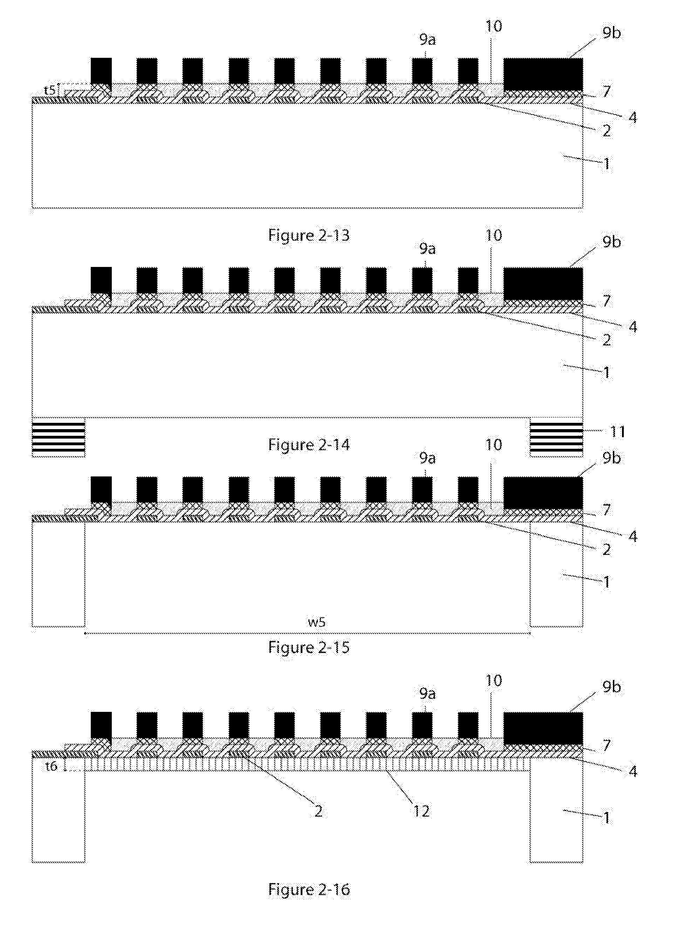

Fig. 2 illustrates the process flow steps for the fabrication of the device shown in Fig. 1-2. Steps 1 to 3 are skipped for the device shown in Fig. 1-1. The process steps of Figs. 2-1 to 2-16 are as follows:

Fig 2-1: Deposition of a metallic layer 2 of thickness **t1** by PVD on a substrate 1 of thickness **t0.** Layer 2 will constitute the current collector on the cathode side and the electrical contact for the cathode.

Fig. 2-2: Deposition and structuration of a photo-sensible polymer layer 3 serving as first photoresist mask for the current collector 2 etch.

Fig. 2-3: Dry etching of the current collector 2 and removal of the photoresist mask 3. Layer 2 is now a mesh with line width **w1** and line spacing **w2.** On the border of the membrane, an electrical contact 2b of dimension **L1** is also structured.

Fig. 2-4: Deposition of the electrolyte layer 4 of thickness **t2**.

Fig. 2-5: Deposition and structuration of a photo-sensible polymer layer 5 serving as second photoresist mask for the electrolyte 4 etch.

Fig. 2-6: Dry etching of an opening ("via hole") of dimension **L2** in the electrolyte 4 and removal of the photoresist mask 5. The "via hole" serves for making electrical contact with the cathode 2 via its contact 2b.

Fig. 2-7: Deposition and structuration of a photo-sensible polymer layer 6 serving as third photoresist mask for the lift-off of the seed layer 7.

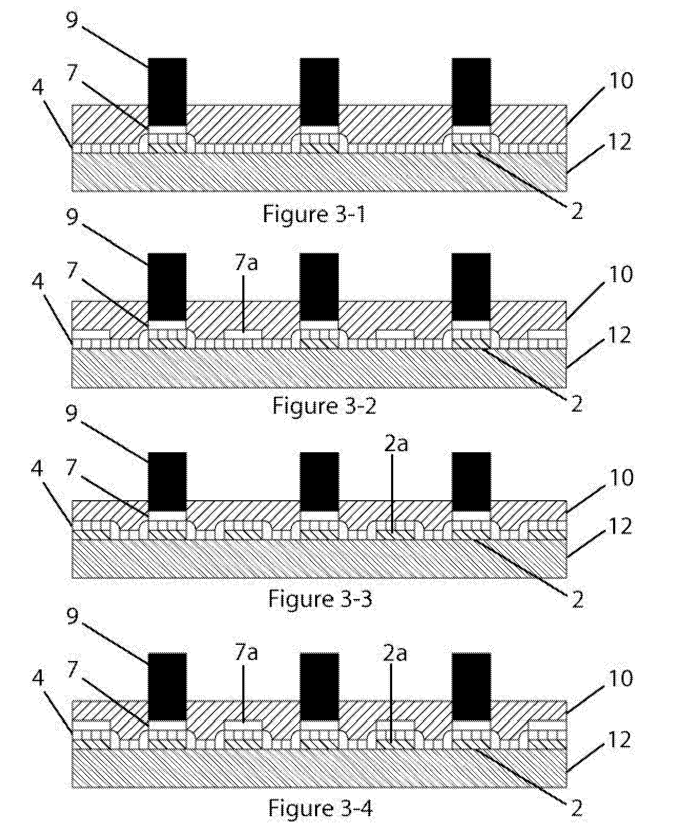

Fig. 2-8: Deposition of a metallic layer 7 of thickness **t3** by PVD over the photoresist mask 6. Layer 7 serves as seed layer for the electrodeposition and as current collector for the anode, depending on the design shown in Fig. 3.

Fig. 2-9: Removal of the photoresist 6. Seed layer 7 is structured by lift-off with line width **w3** and line spacing **w4.** A gap of dimension **L3** is not covered by layer 7. This gap serves as via for the electrical connection of the cathode 2. On one border, the membrane 4 is covered by layer 7 over a dimension **L4.** The seed layer 7 is connected to an electrical contact on the border of the substrate for electrodeposition.

Fig. 2-10: Deposition and structuration of a photo-sensible polymer layer 8 serving as mould for the electrodeposited layer 9 (9a and 9b).

Fig. 2-11: Electrodeposition of the metallic grid 9a and contact 9b of thickness **t4.** The grid 9a has a line width **w5** and a line spacing **w6** (Fig. 2-12). The metallic grid 9 also serves as electrical contact 9b for the anode covering a length **L4** of the seed layer 7.

Fig. 2-12: Removal of the photoresist mould 8. The thickness of the metallic grid is **t4,** the line width **w5** and the space between lines **w6.**

Fig. 2-13: Deposition of the porous anode layer 10 of thickness **t5** with a hard mask protecting the electrical contact of the cathode.

Fig. 2-14: Deposition and structuration of a photo sensible polymer layer 11 serving as fifth photoresist mask for the substrate 1 backside etch.

Fig. 2-15: Dry etching of an opening of size **w5** in the substrate 1.

Fig. 2-16: Deposition of a porous cathode layer 12 of thickness **t6** on the backside of the substrate 1.

Fig. 3-1 is a schematic cross-sectional view of a part of the metallic grid 9 supporting the electrolyte 4, anode 10 and cathode 12. In this example, the whole sub-or seed-layer 7 is covered by the metallic grid 9. The current collector of the cathode 2 is placed under and only under each grid element.

Fig. 3-2 is like Fig. 3-1 where in addition some parts 7a of the sub- or seed-layer 7 are not covered by the metallic grid 9 and serve as current collector for the anode 10.

Fig. 3-3 is like Fig. 3-1, where a current collector of the cathode 2 is introduced that has its lines at the same position as the lines of the grid 9a and additional grid lines 2a in-between.

Fig. 3-4 represents a combination of Figs. 3-2 and 3-3. Parts 7a of the seed layer 7 are not covered by the metallic grid 9 and serve as current collector for the anode 10, and some parts 2a of the current collector of the cathode 2 are not at the same position as the metallic grid 9. In this case, the extra lines 7a of the seed layer 7 and 2a of the cathode 2 can overlay one another (as shown) or can intersect with one another.

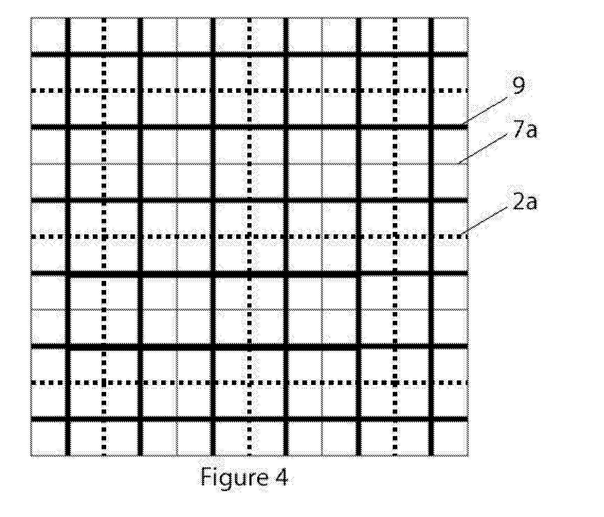

Fig. 4 is a schematic top view of the metallic grid 9, seed layer 7 and current collector of the cathode 2, showing the extra seed-layer lines 7a and the extra cathode collector lines 2a. The line widths of the three networks are between $0\mu m$ and $50\mu m$ and not necessarily equal. The spaces between the lines of these three networks are between $1\mu m$ and $500\mu m$ and not necessarily equal. The centres of the cells of the different networks can be super-imposed or displaced by distances between $1\mu m$ and $100\mu m$.

Fig. 5-1 is a photograph of an example of a nickel grid of triangular shape on top of afree-standing CGO membrane. Side length of triangles: 50 $\mu m$. In this case, the triangular shapes are arranged to form a series of hexagons.

Fig. 5-2 is a photograph of an example of a nickel grid of hexagonal shape on top of a free-standing CGO membrane. Side length of hexagons: 50 $\mu m$. In this photo, the controlled buckling of the membrane in the grid is clearly visible.

The invention is a Positive electrode-Electrolyte-Negative electrode (PEN) structure of a solid oxide fuel cell including an anode grid 9 supporting an electrolyte membrane 4. The invention is used for mid-temperature to medium temperature range solid oxide fuel cells (300°C-600°C). The originality of the invention is the grid 9 serving as mechanical support of the thin electrolyte layer 4, as part of anode and as link for the electrical connections. This design allows placing the two electrical contacts (anode and cathode) on the same side of the support and facilitates the current collection. The supporting grid prevents thermal cracks in the electrolyte membrane 4 and allows improving the reactive area of the cell. The anode and cathode triple phase boundary lines (TPL) can also be improved by the inclusion of micro structured current collector meshes on the both sides of the electrolyte. The original and easy micro fabrication process of this structure is also part of the present invention.

The invention is related to a PEN structure for fuel cell applications comprising:

- a substrate 1 with a "large" opening of width **w5** from $100\mu m$ to 100mm;

- an electrolyte membrane 4 closing the said opening;

- a metallic grid 9 supporting the membrane 4 and being part of the anode;

- an anode 10;

- a cathode 12;

- a current collector mesh formed by the grid 9 on the anode side;

- a current collector mesh 2 on the cathode side;

- an electrical contact 9b to the anode, located on the anode side; and

- an electrical contact 2b to the cathode, also located on the anode side.

The substrate 1 is a silicon, glass, Foturan™, Pyrex™ or quartz flat wafer with diameter of for example 10 mm to 300 mm (Fig. 2-1).

In a first design, the electrolyte 4 is directly deposited onto the substrate 1 (possibly using a buffer layer) (Fig. 1-1). In a second design, a metal mesh for cathode current collector 2 is deposited and patterned first (Figs. 1.1, Fig. 2-1, 2-2, 2-3). It is deposited by PVD, CVD, evaporation or PLD (pulsed laser deposition) and structured using photolithography and dry or wet etch. The collector 2 has the form of a two-dimensional mesh. The collector material is a conductive metal or oxide. The thickness t1 of the collector 2 is between 50nm and 200nm, its line width between 1mm and $10\mu m$ and the spaces between lines between $5\mu m$ and $500\mu m$.

The electrolyte 4 is deposited by thin film technology (magnetron sputtering, pulsed laser deposition, chemical vapour deposition, spray pyrolysis, sol gel method, evaporation, screen printing, tape casting) and has a thickness between 50nm and $10\mu m$ (Fig. 2-4). The electrolyte 4 is an oxygen ion conductor, typically $ZrO_2{:}Y_2O_3$ (YSZ) or $Ce_xGd_{1-x}O_{2-y}$ (CGO), or other doped or undoped oxide ion conductors that usually exhibit the crystal structure of fluorites (for example: $ZrO_2$, $CeO_2$,), corundum (for exemple: $Y_2O_3$), perovskite (for example: $La_{1-x}Sr_xGa_{1-y}Mg_yO_3$), tungsten bronzes (for example: $SrBaNbO_6$), pyrochlores or Aurivilius phases (for example:$Bi_4Ti_3O_{12}$). The electrolyte film is removed at the border where the contact to the cathode 2b is foreseen (Figs 2-5 and 2-6, dimension **L2**).

The electrolyte membrane 4 is supported by grid 9 (Figs 2-10 to 2-12). For its fabrication, a photoresist 6 is deposited and patterned first (Fig. 2-7) to allow for deposition of a seed layer 7, which is patterned by dissolving the resist (lift-off technique) arriving at the schematic structure of Fig. 2-9. The seed layer 7 is an electrical conductive metal such Cr, Au, Al, Cu, Pt, Pd, Ni, Mo, Ag, Ce, Gd or combination thereof. It is deposited preferentially by means of evaporation or magnetron sputtering. In the next step the mould 8 is prepared in the form of a patterned resist. The grid structure 9 is grown inside the mould by electrochemical deposition, the current being supplied through the seed layer 7 (Fig. 2-11), which is connected on the wafer level to a power supply. Alternatively, the deposition can be performed by electroless plating. The growth of layer 9 yields the grid structure 9a, the anode contact 9b, which is of the same body as the grid. The material of the grid 9 is selected among electronically conductive metals (including Ni, Cu, Fe, Pt). The height t4 of the grid 9 is usually at minimum twice as thick as the electrolyte membrane 4 and between $1\mu m$ and $100\mu m$, its line width **w5** between $1\mu m$ and $100\mu m$. The openings in the grid have dimensions **w6** between $5\mu m$ and $500\mu m$.

The grid 9 mechanically supports the electrolyte membrane 4 and serves as current collector for the anode layer 10. The grid 9 covers the central part of the substrate to reach contacts for external electrical connections via contact 9b. The anode layer 10 is deposited by PVD, spray pyrolysis, CVD, PLD or evaporation over and in the spaces of the grid 9, covering the free surface of the electrolyte 4 (Fig. 2-13). The cathode contact on width **L3** is protected by a sacrificial layer to avoid a short (by dry or wet etching or by lift-off). The thickness **t5** of the anode layer 10 is between 50nm and 5 m. The material of the anode 10 is a porous composite of an electronic conductor (Ni, Pt, Ce, Gd...) and an ionic conductor (YSZ, CGO, ...), or a porous mixed conductor (LSCF, LSC...).

The liberation of the membrane 4 is preferentially carried out by deep dry etching process as available for silicon and silicon glass. First a thick resist 11 is deposited, and patterned by photolithography (Fig 2-14). The resist serves as mask for deep dry etching. An opening is formed into the substrate 1, of width **w5** (Fig. 2-15), measuring $100\mu m$ to 100mm.

The cathode layer 12 is deposited by PVD, spray pyrolysis, CVD, PLD or evaporation over the electrolyte on the opposite side of the anode through the large opening in the substrate (dimension **w5)** of the support (Fig. 2-16). Cathode layer 12 covers the cathode current collector 2, to which there is automatically an electrical contact. The thickness **t6** of the cathode is between 50nm and 5mm. The material of the cathode is a porous composite of an electronic conductive oxide ($IrO_2$, $RuO_2$) and an ionic conductor (YSZ, CGO, LSC, LSCF...) or a porous mixed conductor such as $(LaSr)(CoFe)O_3$ (LSCF) or $La_{1-x}Sr_xCoO_3$ (LSCO)

Variations of the design shown in Figures 3-1 to 3-4 relate to the use of a seed layer 7 as current collector mesh on the anode side, and of a thin film structure as current collector on the cathode side. In Figure 3-1, the grid structure 9 is grown on the entire seed layer 7. On both sides, no fine distribution of current is foreseen. In Fig. 3-2, a part of the seed layer 7 is used to distribute on a smaller scale the current within each opening of the grid 9. This fme distribution can be effectuated by a multitude of electrically connected lines 7a. The simplest case, with one additional sub-lattice is shown (as in Fig. 4). In Fig. 3-3, an additional thin current collector 2 is introduced on the cathode side, one cathode mesh having the same pattern as and being below the structure 9 of the anode side, and the additional cathode grid 2a being spaced in between the anode grid 9. As a further variation, the two current collectors might be shifted with respect to each other (Fig. 4).

## Claims

1. Solid oxide fuel cell structure obtainable by selective electrochemical processing, the structure comprising:

   - an electrolyte membrane formed by a thin film more than 50nm but less than $10\,\mu m$ thick, covering a supporting structure made of a bulk substrate, the supporting structure having at least one opening that is $100\mu m$ to 100mm wide and that is covered by the electrolyte membrane; and
   - a metallic grid applied over the electrolyte membrane and serving at the same time as structural element to support the membrane and as current collector, the metallic grid having gridlines that are higher than the membrane thickness and whose height to width ratio is larger than 0.5.

2. Structure of claim 1, wherein the metallic grid has a mesh size about 10 to 1000 times smaller than the width of said opening.

3. Structure of claim 1 or 2, wherein:

   - the metallic grid is applied on top of a patterned metallic sub-layer structure,
   - the sub-layer structure comprises a wider pattern corresponding to the applied metallic grid, and a finer pattern that is not covered by the applied metallic grid, said finer pattern being arranged for supplying a fine distribution of current and increasing the density of electrolyte-electrode boundaries exposed to the fluid, and
   - the metallic grid is on an anode side which in use is exposed to hydrocarbon fluid.

4. Structure of claim 1, 2 or 3, wherein the metallic grid is an anode current collector, and a current collector structure is added on an opposite cathode side.

5. Structure of claim 4, wherein the cathode current collector structure has the same size and shape as the anode current collector grid.

6. Structure of claim 4 or 5, wherein the cathode current collector structure has a different shape and/or is displaced with respect to the anode current collector grid.

7. Structure of claim 4, 5 or 6, comprising a first electrical contact to the metallic anode grid, the first contact being located on an anode side of the structure, and a second electrical contact to the cathode, the second contact also being located on the anode side of the structure

8. Structure of any preceding claim, wherein the electrolyte thin film is selected from $CeO_2$:$Gd_2O_3$ (CGO), $ZrO_2$:$Y_2O_3$ (YSZ), and doped or undoped oxide ion conductors that exhibit the crystal structure of fluorites, corundum, perovskite, tungsten bronzes, pyrochlores or Aurivilius phases.

9. Structure of any preceding claim, wherein the metallic grid is made from at least one metal selected from Ni, Cu, Pt, Cr, Mo, Ag, Co, and Pd.

10. Structure of any preceding claim, further comprising a porous anode film in particular selected from NiOx and Ni-(electrolyte) composite.

11. Structure of any preceding claim, further comprising a porous cathode film in particular selected from a porous mixed conductor such as (LaSr)(CoFe)$O_3$ (LSCF) or $La_{1-x}Sr_xCoO_3$ (LSCO); and composites of an electronically conductive oxide and an ionically conductive oxide.

12. Structure of any preceding claim, wherein the grid exhibits a polygonal pattern including in particular regular polygons such as triangles, squares, hexagons and octagons.

13. Structure of any one of claims 1 to 11, wherein the grid exhibits irregular shapes including spider web type shapes and fractal structures.

14. An array of structures of any preceding claim, which are fabricated on a common substrate and connected electrically to form an array of solid oxide fuel cells.

15. A method of producing the structure of any preceding claim by photolithographic patterning and electrochemical, physical and chemical vapour processing of successive layers on an etchable substrate, wherein the membrane and the metallic grid are applied to the substrate, and the substrate is etched to provide said opening.

16. The method of claim 15, wherein the substrate opening is etched by dry etching in $SF_6$ gas or by wet etching in alkaline solutions.

17. The method of claim 15 or 16, wherein the metallic grid is moulded in a polymer mould, in particular of photoresist.

Contact
cathode (2b)    Grid (9a)    Porous
                             anode (10)         Electrolyte (4)         Contact
                                                                        anode (9b)

Current
collector (2)

Porous
cathode (12)

Device frame
Substrate (1)

Figure 1-1

Contact
cathode (2b)    Grid (9a)    Porous
                             anode (10)         Electrolyte (4)         Contact
                                                                        anode (9b)

Device frame
Substrate (1)

Porous
cathode (12)

Current
collector (2)

Figure 1-2

Figure 2-1

Figure 2-2

Figure 2-3

Figure 2-4

Figure 2-5

Figure 2-6

Figure 2-7

Figure 2-8

Figure 2-9

Figure 2-10

Figure 2-11

Figure 2-12

Figure 2-13

Figure 2-14

Figure 2-15

Figure 2-16

Figure 3-1

Figure 3-2

Figure 3-3

Figure 3-4

Figure 4

**Fig. 5-1**

**Fig. 5-2**

## EUROPEAN SEARCH REPORT

European Patent Office

Application Number

EP 05 11 2175

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JANKOWSKI A F ET AL: "TESTING OF SOLID-OXIDE FUEL CELLS FOR MICRO TO MACRO POWER GENERATION" PROCEEDINGS OF THE INTERNATIONAL SYMPOSIUM ON SOLID OXIDE FUEL CELLS, XX, XX, vol. 99, no. 19, 17 October 1999 (1999-10-17), pages 932-937, XP009069051 * abstract * | 1,2,4, 8-12, 14-17 | INV. H01M8/12 H01M8/02 |
| Y | WO 2005/030376 A (LILLIPUTIAN SYSTEMS INC [US]; SCHAEVITZ SAMUEL B [US]; FRANZ ALEKSANDE) 7 April 2005 (2005-04-07) * figures 11a-11g * * page 2, lines 13-17 * * page 7, line 28 - page 11, line 23 * * page 13, line 31 - page 14, line 2 * * page 17, lines 15-24 * | 1,2,4, 8-12, 14-17 | |
| Y | US 2003/012994 A1 (KUSHIBIKI KEIKO [JP] ET AL) 16 January 2003 (2003-01-16)  * examples 3,4 * * figures 7a-7h,8a-8h,9 * * figures 26-29 * | 1,2,4, 8-12, 14-17 | **TECHNICAL FIELDS SEARCHED (IPC)**  H01M |
| A | SRIKAR V T ET AL: "Structural design considerations for micromachined solid-oxide fuel cells" JOURNAL OF POWER SOURCES, ELSEVIER, AMSTERDAM, NL, vol. 125, no. 1, 2 January 2004 (2004-01-02), pages 62-69, XP004480787 ISSN: 0378-7753 * the whole document * | 1-17 | |

-/--

The present search report has been drawn up for all claims

| Place of search | Date of completion of the search | Examiner |
|---|---|---|
| Munich | 8 January 2007 | Jacquinot, Patrick |

EPO FORM 1503 03.82 (P04C01)

**European Patent
Office**

**EUROPEAN SEARCH REPORT**

Application Number

EP 05 11 2175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/121222 A1 (SARKAR PARTHO [CA] ET AL) 24 June 2004 (2004-06-24)<br>* figure 2 *<br>* paragraphs [0024], [0031] *<br>----- | 1-17 | |
| A | EP 1 284 520 A2 (NISSAN MOTOR [JP]) 19 February 2003 (2003-02-19)<br>* figures 1a-1c *<br>* paragraphs [0019] - [0022] *<br>----- | 1,8,11, 14 | |
| | | | **TECHNICAL FIELDS SEARCHED (IPC)** |

The present search report has been drawn up for all claims

| Place of search | Date of completion of the search | Examiner |
|---|---|---|
| Munich | 8 January 2007 | Jacquinot, Patrick |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

 

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 05 11 2175

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2007

| Patent document cited in search report | | Publication date | Patent family member(s) | | Publication date |
|---|---|---|---|---|---|
| WO 2005030376 | A | 07-04-2005 | CA 2539539 A1 | | 07-04-2005 |
| | | | CN 1856350 A | | 01-11-2006 |
| | | | EP 1682253 A1 | | 26-07-2006 |
| US 2003012994 | A1 | 16-01-2003 | CN 1489799 A | | 14-04-2004 |
| | | | EP 1340281 A2 | | 03-09-2003 |
| | | | WO 0243177 A2 | | 30-05-2002 |
| | | | JP 3731648 B2 | | 05-01-2006 |
| | | | JP 2002222659 A | | 09-08-2002 |
| US 2004121222 | A1 | 24-06-2004 | NONE | | |
| EP 1284520 | A2 | 19-02-2003 | JP 2003059496 A | | 28-02-2003 |
| | | | US 2003031910 A1 | | 13-02-2003 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050115889 A1
- US 20050115889 A

### Non-patent literature cited in the description

- **B.C.H. STEELE ; A. HEINZEL.** Materials for fuel-cell technologies. *NATURE,* 2001, vol. 414, 345
- **R. DOSHI ; V.L. RICHARDS ; J.D. CARTER ; X. WANG ; M. KRUMPELT.** Development of SOFC's that operate at 500 °C. *J.El.Chem.Soc.,* 1999, vol. 146, 1273
- **P. HOLTAPPLES ; U. VOGT ; T. GRAULE.** Ceramic materials for advanced solid oxide fuel cells. *Adv. Eng.Mat.,* 2005, vol. 292, 292
- **X CHEN ; N.J:WU ; L.SMITH ; A.IGNATIEV.** Thin-film heterostructure solid oxide fuel cells. *Applied Physics letters,* vol. 84 (14), 2700-2702
- **S.P. TIMOSHENKO ; J.M. GERE.** Theory of elastic stability. McGraw-Hill, 1961, 49